# EUROPÄISCHE PATENTSCHRIFT

(11) **EP 2 133 273 B1**
(45) Veröffentlichungstag und Bekanntmachung des Hinweises auf die Patenterteilung: **18.05.2011**
(21) Anmeldenummer: 09162103.7
(22) Anmeldetag: 05.06.2009
(51) Int. Cl.: B65B 33/00, B29C 63/02

(54) **Verfahren zum Eindecken eines Gegenstands mit einer Schutzfolie**
Method of covering an object with a protective film
Procédé d'encadrement d'un objet à l'aide d'un film de protection

(30) Priorität: 09.06.2008 DE 102008027368
(43) Veröffentlichungstag der Anmeldung: 16.12.2009
(73) Patentinhaber: TESA SE, 20253 Hamburg (DE)
(72) Erfinder: Barkley, Arne, 25551 Winseldorf (DE); Stricker, Rainer, 86153 Augsburg (DE); Bendrin, Gerhard, 72406 Bisingen-Wessingen (DE)

(56) Entgegenhaltungen:
- WO-A-00/21734
- DE-A1-102006 014 304
- US-A- 5 106 439
- US-A- 5 254 197

## Beschreibung

Die Erfindung betrifft ein Verfahren zum Eindecken eines Gegenstands mit einer Schutzfolie.

Die Konservierung und der Schutz von Kraftfahrzeugen während des Transports vom Hersteller zum Händler werden seit geraumer Zeit praktiziert.

Die herkömmliche Methode der Konservierung von Automobilen ist das Auftragen von Paraffin- oder Acrylatwachsen in der Stärke von 5 bis 20 µm. Es hat sich aber gezeigt, dass insbesondere bei waagerecht liegenden Flächen der Fahrzeuge wie Motorhaube, Dach und Kofferraumdeckel eine derart dünne und zumeist ungleichmäßige Schicht gegen äußere Einflüsse wie beispielsweise die ätzende Wirkung von Vogelkot nicht genügend Schutz bietet.

Ein erheblicher Nachteil der Paraffinwachsversiegelung ist die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung passgenau aufgeschrumpft werden. Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlussöffnungen vorgesehen, die zeitraubend geöffnet und wieder verschlossen werden müssen. Die Sicht beim Rangieren eines mit einer Haube eingedeckten Kraftfahrzeugs ist stark beeinträchtigt und es kommt durch eingeschlossenen Schmutz und durch unvermeidbares Scheuern auf dem Lack stellenweise zu Kratzern.

In den letzten Jahren werden stattdessen verstärkt temporär aufgebrachte selbstklebende Oberflächenschutzfolien angewendet. Diese sind speziell für den mechanischen und chemischen Schutz von frischen Kraftfahrzeuglacken vorgesehen und haben eine gegenüber den Wachsen deutlich verbesserte Schutzwirkung und gegenüber den Hauben den Vorteil, kostengünstiger und deutlich schneller applizierbar zu sein.

Aber auch die Applikation ist nicht problemlos, da selbstverständlich ein präzises und vor allem faltenfreies Aufbringen der Schutzfolie auf den Untergrund gewährleistet sein muss, um ein unterlaufen von Feuchtigkeit oder verschmutztem Wasser zu verhindern. Gerade bei größeren Flächen wie Windschutzscheiben oder Dächern von Automobilkarosserien ist dies von Hand nur sehr aufwändig zu gewährleisten.

Darüber hinaus kostet das Aufbringen derartiger Schutzfolien von Hand kostspielige arbeitszeit.

Das Eindecken eines Gegenstandes mit einer Schutzfolie mittels eines oberen Werkzeugs, dessen Oberflächengestaltung eine Negativform der zu schützenden Oberfläche darstellt, ist aus WO 00/21734 bekannt.

Aufgabe der Erfindung ist es, ein Verfahren zur Verfügung zu stellen, mit dem Schutzfolien sehr präzise, möglichst faltenfrei und zügig auf dem zu schützenden Gegenstand aufgebracht werden können.

Gelöst wird diese Aufgabe durch eine Vorrichtung, wie es in Anspruch 1 dargelegt ist. Weiterbildungen des erfindungsgemäßen Verfahrens sind dabei Gegenstand der Unteransprüche.

Demgemäß betrifft die Erfindung ein Verfahren zum Eindecken eines Gegenstands mit einer Schutzfolie, wobei
- die Schutzfolie auf die Oberfläche eines oberen Werkzeug aufgebracht wird, wobei die Oberflächengestaltung des oberen Werkzeugs im Wesentlichen eine Negativform der zu schützenden Oberfläche darstellt,
- die Schutzfolie durch ein erstes Vakuum, das zwischen dem oberen Werkzeug und der Schutzfolie erzeugt wird, in ihrer Position fixiert wird,
- eine Relativbewegung vom oberen Werkzeug und/oder vom Gegenstand stattfindet, so dass das obere Werkzeug über der Oberfläche des auszurüstenden Gegenstands positioniert ist,
- ein zweites Vakuum zwischen der Schutzfolie und der Oberfläche des auszurüstenden Gegenstands erzeugt wird,
- das erste Vakuum belüftet wird, so dass die Schutzfolie auf die Oberfläche des auszurüstenden Gegenstands aufgezogen wird,
- das Werkzeug und der mit der Schutzfolie ausgerüstete Gegenstand voneinander getrennt werden.

Das zweite Vakuum wird dabei bevorzugt im Verfahren angewandt, um die sichere Positionierung der Folie zu gewährleisten.

In einer ersten vorteilhaften Ausführungsform der Erfindung ist eine Vorrichtung vorgesehen, mittels derer die im Randbereich der Oberfläche des oberen Werkzeugs überstehende Oberflächenschutzfolie entfernt werden kann.

Vorzugsweise besteht die Vorrichtung aus einem Schneidsystem, vorzugsweise einer heißen Schneidleiste, die in einem unteren Werkzeug vorhanden ist. Dieses untere Werkzeug kann in Richtung des mit der Schutzfolie ausgerüsteten oberen Werkzeugs gefahren werden, bis die Schneidleiste die überstehende Schutzfolie durchtrennt, so dass im oberen Werkzeug ein Stanzling verbleibt, dessen Abmaße idealerweise exakt an den zu schützenden Gegenstand angepasst sind. In Varianten kann das obere Werkzeug auf das untere Werkzeug fahren, oder unteres Werkzeug und oberes Werkzeug fahren aufeinander zu.

Der Rand der Oberfläche des oberen Werkzeugs ist mit einem Dichtungssystem versehen. Dieses erleichtert das Erzeugen des ersten Vakuums, indem die zwischen oberen Werkzeug und Folie befindliche Luft über das Dichtungssystem entzogen wird. In das Dichtungssystem ist eine Vorrichtung, beispielsweise eine Absaugung, integriert, die das zweite Vakuum zwischen der Schutzfolie und der Oberfläche des auszurüstenden Gegenstands erzeugt.

Das Schneidsystem kann in das Dichtungssystem integriert sein.

Gemäß einer weiteren vorteilhaften Ausführungsform der Erfindung ist in dem oberen Werkzeug ein Andrücksystem vorgesehen, mit die Schutzfolie auf die Oberfläche des auszurüstenden Gegenstands gepresst werden kann, vorzugsweise in Form eines Rakels oder eines Stempels.

Diese Vorrichtung sorgt für einen Erstkontakt der Folie auf der zu schützenden Oberfläche.

Neben den genannten Ausführungsformen kann das Andrücksystem auch physikalischer Natur sein. Hierunter werden Systeme verstanden, die die Folie mit Fluiden wie Gasen (Luft, erwärmte Luft) oder wie Flüssigkeiten (Wasser) andrücken.

Dieses Andrücksystem ist insbesondere dann vorteilhaft, wenn das zweite Vakuum nicht angelegt werden kann. Unter Zuhilfenahme des Andrücksystems kann die Folie auf dem gewünschten Untergrund problemlos aufgebracht werden.

Vorzugsweise befindet sich der auszurüstende Gegenstand auf einem unteren Werkzeug, das vorzugsweise in der Lage ist, seine Position zu ändern. Auf diese Weise ist die größtmögliche Flexibilität geboten, um die Schutzfolie und den Gegenstand zusammenzubringen.

Gemäß einer weiteren vorteilhaften Ausführungsform der Erfindung können auf die Oberfläche des auszurüstenden Gegenstands Hilfsmedien aufgebracht werden können. Bei diesen Hilfsmedien kann es sich beispielsweise um Flüssigkeiten handeln, die die Oberfläche des Gegenstands oder die Folienoberflächen beeinflussen.

Bevorzugt werden die Hilfsmedien durch das untere Werkzeug auf die Oberfläche des auszurüstenden Gegenstands aufgebracht.

Darüber hinaus kann eine Vorrichtung vorhanden sein, bevorzugt integriert in das obere Werkzeug, mit der besagte Hilfsmedien auf die andere Folienoberfläche aufgebracht werden können.

Ein mögliches Hilfsmedium ist beispielsweise eine Reinigungsflüssigkeit, mit der die Oberfläche des Gutes vor dem Aufbringen der Schutzfolie gereinigt wird.

Überhaupt hat es sich als vorteilhaft herausgestellt, wenn die Oberfläche des Gutes einem Reinigungsschritt unterzogen werden kann, bevor die Schutzfolie aufgelegt wird.

Dem Fachmann ist klar, dass das obere und das untere Werkzeug gegebenenfalls mittels einer Feinjustierung optimal bezüglich Lage und Toleranz (Winkel, Position oder ähnliches) der Schutzfolie auf dem Gegenstand eingestellt werden können.

Besonders bevorzugt kommt das erfindungsgemäße Verfahren bei der Ausrüstung von Gegenständen im Automobilbau wie Frontscheiben, Seitenscheiben, Kunststoffleisten, Chromteilen und Felgen mit selbstklebenden Oberflächenschutzfolien zum Einsatz.

Die vollautomatische Ausrüstung der genannten Gegenstände mit Schutzfolien kann innerhalb der Produktionslinie erfolgen, und zwar beliebig beim Automobilhersteller selbst oder beim Zulieferer der mit der Schutzfolie ausgerüsteten Anbauteile.

Die Vorteile des erfindungsgemäßen Verfahrens sind immens.

Die Folie kann vollautomatisch auf dem Gegenstand platziert werden, und zwar aufgrund des vergleichsweise hohen apparativen Aufwands sehr präzise, weitgehend faltenfrei und zügig. Es wird keine Arbeitskraft gebunden.

Insbesondere wenn aus der Folie ein Stanzling geschnitten wird, der eine definierte Geometrie hat, ist eine Positionierung mit geringsten Toleranzen möglich.

Im Folgenden werden einige typische (selbst-)klebende Oberflächenschutzfolien beschrieben, die im erfindungsgemäßen Verfahren Verwendung finden können.

Die Erfindung ist aber nicht auf diese Aufzählung beschränkt, sondern für den Fachmann ist es offensichtlich, dass auch andere Folien geeignet sind.

In der EP 0 592 913 A1 ist eine Oberflächenschutzfolie für den Transport von Automobilen beschrieben, die aus einem Copolymerisat aus EVAc mit einem Gehalt von 33 % Vinylacetat besteht.

Die in der DE 195 32 220 A1 dargelegte Klebefolie weist einen EVAc-Kleber auf einem Polyolefinträger auf.

Die EP 1 190 008 A1 beschreibt eine Schutzfolie (auch Oberflächenschutzklebeband genannt), die aus einer Schicht einer ungereckten Trägerschicht und einer Kleberschicht besteht. Als Trägerschicht des Klebers dient eine thermoplastische Polyolefinfolie, welche unverstreckt ist und mindestens ein Polypropylenblockcopolymer enthält. Der Gehalt an Polypropylenblockcopolymer macht 10 bis 95% (w/w) der Schutzfolie aus.

Die WO 03/018701 A1 offenbart eine selbstklebende Schutzfolie für Oberflächenschutzanwendungen, die eine ein- oder mehrlagige, insbesondere polyolefinische Trägerschicht und eine selbstklebende Schicht aufweist. Die Selbstklebemasse ist folgendermaßen aufgebaut:
- 30 bis 70 Gew.-% eines oder mehrerer Elastomere auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren beziehungsweise deren Hydrierungsprodukten, sowie
- 30 bis 70 Gew.-% Klebharze, wobei mindestens die Hälfte der Klebharze Flüssigkeitsharze mit einem Erweichungspunkt von unter 25 °C gemessen mit der Ring- und Ball-Methode sind.

In EP 1 388 582 A1 wird eine selbstklebende Schutzfolie offenbart, deren Selbstklebemasse auf einem Polyisobutylen und/oder einem Styrolblockcopolymer basiert.

Als Folien (mit und ohne Klebemassen) können zum Beispiel unverstreckte oder verstreckte Folien aus Polyolefin wie Polyethylen, Polypropylen, Polybuten, deren Copolymeren, Blends dieser Polymeren zum Beispiel mit Polyethylenvinylacetat oder lonomeren sowie Folien aus Polyvinylchlorid oder Polyester eingesetzt werden. Dehnbare Folien können durch eine Armierung, vorzugsweise ein Fadengelege, verstärkt werden. Weiterhin ist der Einsatz von Papier-Kunststoff-Verbünden, die zum Beispiel durch Extrusionsbeschichtung oder Laminierung erhalten werden, möglich. Textilmaterialien können als Textil-Kunststoff-Verbund verwendet werden.

Anhand der nachfolgend beschriebenen Figur wird eine besonders vorteilhafte Ausführung des erfindungsgemäßen Verfahrens näher erläutert, ohne damit die Erfindung unnötig einschränken zu wollen.

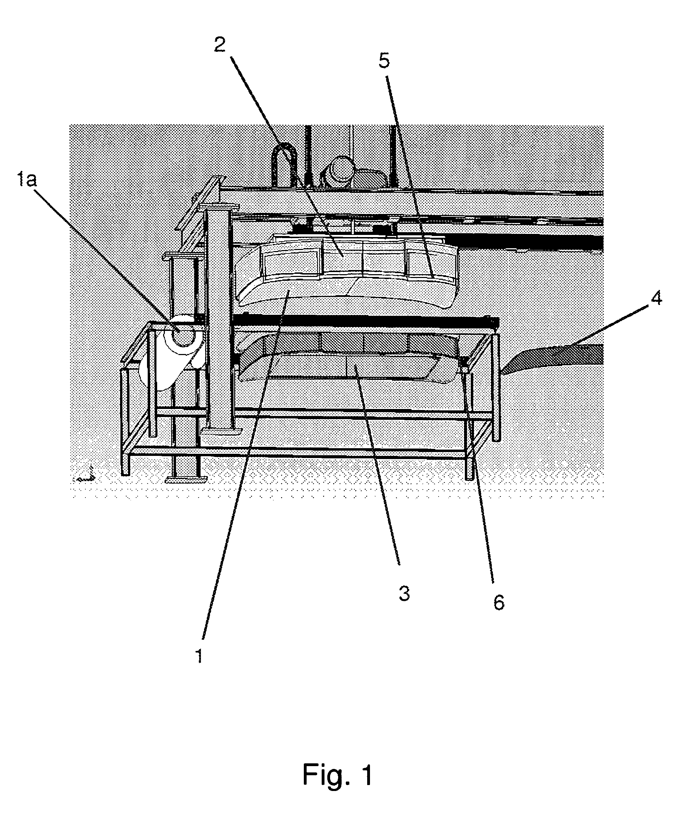

Die Figur 1 zeigt das Verfahren, das zum Aufbringen eines Stanzlings einer selbstklebenden Oberflächenschutzfolie 1 auf eine Windschutzscheibe 4, die später in einem Automobil verbaut wird.

Die Schutzfolie 1 befindet sich auf einem Wickel 1a. Von diesem wird die Schutzfolie 1 in Richtung des oberen Werkzeugs 2 abgerollt, bis das Ende der Folie 1 über das in dieser Figur rechte Ende der Werkzeuge 2, 3 hinausgeht.

Die Oberflächengestaltung des oberen Werkzeugs 2 stellt im Wesentlichen eine Negativform der zu schützenden Windschutzscheibe 4 dar.

Das obere Werkzeug 2 senkt sich aus der dargestellten Position, bis das obere Werkzeug 2 auf dem unteren Werkzeug 3 aufliegt. Zwischen den Werkzeugen 2, 3 befindet sich die Schutzfolie 1.

Am Rand des oberen Werkzeugs 2 befindet sich ein Dichtungssystem 5 in Form einer Gummiwulst. Die Gummiwulst umgreift den Rand der Windschutzscheibe 4.

Am Rand des unteren Werkzeugs 3 ist ein Schneidsystem 6 integriert, wobei das Schneidsystem 6 als erhitzbare Schneidleiste ausgeführt ist. Die Schneidleiste wird nun erhitzt, so dass die Schutzfolie 1 durchtrennt wird, und alles, was über den äußeren Rand des oberen Werkzeugs 2 an Schutzfolie 1 hinausragt, abgeschnitten wird.

Der aus der Schutzfolie 1 entstehende Stanzling wird durch ein erstes Vakuum, das zwischen dem oberen Werkzeug 2 und der Schutzfolie 1 erzeugt wird, in seiner Position im oberen Werkzeug 2 fixiert.

Das obere Werkzeug 2 fährt anschließend in die dargestellte Position, gleichzeitig wird von rechts eine Windschutzscheibe 4 auf das untere Werkzeug 3 aufgelegt.

Durch eine Bewegung des oberen Werkzeugs 2 in Richtung des unteren Werkzeugs 3 wird der Stanzling exakt über der Oberfläche der Windschutzscheibe 4 positioniert. Zwischen dem Stanzling aus der Schutzfolie 1 und der Oberfläche der Windschutzscheibe 4 wird ein zweites Vakuum erzeugt, indem die dazwischen befindliche Luft über das Dichtungssystem 5 abgesaugt wird.

Gleichzeitig oder zeitlich danach wird das erste Vakuum belüftet, so dass der Stanzling aus der Schutzfolie 1 auf die Oberfläche der Windschutzscheibe 4 aufgezogen wird. Zum Abschluss fährt das obere Werkzeug 2 wieder hoch, und die mit der Schutzfolie 1 versehene Windschutzscheibe 4 wird aus dem unteren Werkzeug 3 entfernt.

Dies stellt das Ende der Periode dar, die sich nun in der beschriebenen Abfolge der Schritte wiederholt.

## Patentansprüche

1. Verfahren zum Eindecken eines Gegenstands mit einer Schutzfolie, wobei
die Schutzfolie auf die Oberfläche eines oberen Werkzeug aufgebracht wird, wobei
die Oberflächengestaltung des oberen Werkzeugs im Wesentlichen eine Negativform der zu schützenden Oberfläche darstellt,
die Schutzfolie durch ein erstes Vakuum, das zwischen dem oberen Werkzeug und der Schutzfolie erzeugt wird, in ihrer Position fixiert wird,
der Rand der Oberfläche des oberen Werkzeugs mit einem Dichtungssystem versehen ist,
in das Dichtungssystem eine Vorrichtung wie eine Absaugung integriert ist, die ein zweites Vakuum zwischen der Schutzfolie und der Oberfläche des auszurüstenden Gegenstands erzeugt,
eine Relativbewegung vom oberen Werkzeug und/oder vom Gegenstand stattfindet, so dass das obere Werkzeug über der Oberfläche des auszurüstenden Gegenstands positioniert ist,
ein zweites Vakuum zwischen der Schutzfolie und der Oberfläche des auszurüstenden Gegenstands erzeugt wird,
das erste Vakuum belüftet wird, so dass die Schutzfolie auf die Oberfläche des auszurüstenden Gegenstands aufzieht,
das Werkzeug und der mit der Schutzfolie ausgerüstete Gegenstand voneinander getrennt werden.

2. Verfahren nach Anspruch 1,
**dadurch gekennzeichnet, dass**
eine Vorrichtung vorgesehen ist, mittels derer die im Randbereich der Oberfläche des oberen Werkzeugs überstehende Oberflächenschutzfolie entfernt werden kann.

3. Verfahren nach Anspruch 2,
**dadurch gekennzeichnet, dass**
die Vorrichtung aus einem Schneidsystem, vorzugsweise einer heißen Schneidleiste besteht.

4. Verfahren nach zumindest einem der vorherigen Ansprüche,
**dadurch gekennzeichnet, dass**
in dem oberen Werkzeug ein Andrücksystem vorgesehen ist, mit die Schutzfolie auf die Oberfläche des auszurüstenden Gegenstands gepresst werden kann, vorzugsweise in Form eines Rakels oder eines Stempels, oder ein Andrücksystem vorhanden ist, das die Folie mit Fluiden wie Gasen (Luft, erwärmte Luft) oder wie Flüssigkeiten (Wasser) andrückt.

5. Verfahren nach zumindest einem der vorherigen Ansprüche,
**dadurch gekennzeichnet, dass**
sich der auszurüstende Gegenstand auf einem unteren Werkzeug befindet, das vorzugsweise in der Lage ist, seine Position zu ändern.

6. Verfahren nach zumindest einem der vorherigen Ansprüche,
**dadurch gekennzeichnet, dass**
auf die Oberfläche des auszurüstenden Gegenstands Hilfsmedien aufgebracht werden können.

7. Verfahren nach zumindest einem der vorherigen Ansprüche,
**dadurch gekennzeichnet, dass**
das Verfahren zur Ausrüstung von Gegenständen im Automobilbau wie Frontscheiben, Seitenscheiben, Kunststoffleisten, Chromteilen und Felgen mit selbstklebenden Oberflächenschutzfolien eingesetzt wird.

## Claims

1. Method of covering an object with a protective film, wherein
the protective film is applied to the surface of an upper mould, wherein the surface configuration of the upper mould represents substantially a negative form of the surface to be protected,
the protective film is fixed in position by a first vacuum which is generated between the upper mould and the protective film,
the edge of the surface of the upper mould is provided with a sealing system,
a device such as a suction means is integrated into the sealing system and generates a second vacuum between the protective film and the surface of the object to be overlaid,
a relative movement of the upper mould and/or of the object takes place so that the upper mould is positioned over the surface of the object to be overlaid,
a second vacuum is generated between the protective film and the surface of the object to be overlaid,
air is admixed to the first vacuum so that the protective film is drawn onto the surface of the object to be overlaid,
the mould and the object overlaid with the protective film are separated from one another.

2. Method according to Claim 1,
**characterized**
**by** the provision of a device by means of which the surface-protecting film protruding in the edge region of the surface of the upper mould can be removed.

3. Method according to Claim 2,
**characterized in that**
the device consists of a cutting system, preferably of a hot cutting bar.

4. Method according to at least one of the preceding claims,
**characterized**
**by** the provision in the upper mould of a pressure-exerting system with which the protective film can be pressed onto the surface of the object to be overlaid, preferably in the form of a doctor blade or a stamp, or by the presence of a pressure-exerting system which uses fluids such as gases (air, heated air) or liquids (water) to apply pressure to the film.

5. Method according to at least one of the preceding claims,
**characterized in that**
the object to be overlaid is located on a lower mould which is preferably able to change its position.

6. Method according to at least one of the preceding claims,
**characterized in that**
auxiliary media can be applied to the surface of the object to be overlaid.

7. Method according to at least one of the preceding claims,
**characterized in that**
the method is used for overlaying objects in automobile construction, such as front windscreens, side windows, plastics strips, chrome parts and wheel rims, with self-adhesive surface-protecting films.

## Revendications

1. Procédé de revêtement d'un objet avec un film de protection, le film de protection étant appliqué sur la surface d'un outil supérieur, la configuration de la surface de l'outil supérieur représentant pour l'essentiel une forme négative de la surface à protéger ;
le film de protection étant maintenu en place à l'aide d'un premier vide réalisé entre l'outil supérieur et le film de protection ;
le bord de la surface de l'outil supérieur étant pourvu d'un système d'étanchéité;
un dispositif tel qu'une aspiration étant intégré dans le système d'étanchéité, ladite aspiration produisant un deuxième vide entre le film de protection et la surface de l'objet à équiper ;
un mouvement relatif se produisant depuis l'outil supérieur et/ou l'objet, de sorte que l'outil supérieur soit positionné au-dessus de la surface de l'objet à équiper ;
un deuxième vide étant produit entre le film de protection et la surface de l'objet à équiper ;
le premier vide étant dissipé par apport d'air, de sorte que le film de protection se lève sur la surface de l'objet à équiper ;
l'outil et l'objet équipé du film de protection étant séparés l'un de l'autre.

2. Procédé selon la revendication 1, **caractérisé en ce qu'**un dispositif est prévu, à l'aide duquel le film de protection de surface dépassant peut être retiré dans la zone de bordure de la surface de l'outil supérieur.

3. Procédé selon la revendication 2, **caractérisé en ce que** le dispositif se compose d'un système de coupe, de préférence d'une baguette de coupe fortement chauffée.

4. Procédé selon au moins l'une quelconque des revendications précédentes, **caractérisé en ce qu'**un système de compression est prévu dans l'outil supérieur, avec lequel le film de protection peut être comprimé sur la surface de l'objet à équiper, de préférence sous la forme d'un racloir ou d'un tampon, ou bien **en ce qu'**un système de compression est prévu, qui comprime le film à l'aide de fluides tels que des gaz (air, air réchauffé) ou des liquides (eau).

5. Procédé selon au moins l'une quelconque des revendications précédentes, **caractérisé en ce que** l'objet à équiper se trouve sur un outil inférieur qui est de préférence en mesure de modifier sa position.

6. Procédé selon au moins l'une quelconque des revendications précédentes, **caractérisé en ce que** des adjuvants peuvent être appliqués sur la surface de l'objet à équiper.

7. Procédé selon au moins l'une quelconque des revendications précédentes, **caractérisé en ce que** le procédé est utilisé pour équiper des objets utilisés dans l'industrie automobile, tels que des parebrises, des vitres latérales, des baguettes en plastique, des pièces chromées et des jantes avec des films de protection de surface autocollants.
